# EUROPÄISCHE PATENTSCHRIFT

(11) **EP 0 668 301 B1**
(45) Veröffentlichungstag und Bekanntmachung des Hinweises auf die Patenterteilung: **21.10.1998**
(21) Anmeldenummer: 94120048.7
(22) Anmeldetag: 17.12.1994
(51) Int. Cl.: C08G 6/02, C08J 3/22

(54) **Keton-Aldehydharze mit breiter Verträglichkeit, Verfahren zu ihrer Herstellung und ihre Verwendung**
Ketone-aldehyde resins having universal compatibility, process for their production and their use
Résines cétone-aldéhyde à compatibilité universelle, procédé de leur préparation et leur utilisation

(30) Priorität: 16.02.1994 DE 4404809
(43) Veröffentlichungstag der Anmeldung: 23.08.1995
(73) Patentinhaber: HÜLS AKTIENGESELLSCHAFT, 45764 Marl (DE)
(72) Erfinder: Ortelt, Martina, Dr., D-45770 Marl (DE); Freitag, Werner, Dr., D-46286 Dorsten (DE); Machate, Christina, Dr., D-48249 Dülmen (DE)

(56) Entgegenhaltungen:
- DE-A- 2 400 194
- DE-A- 2 831 613
- DE-B- 1 262 600

## Beschreibung

Die Erfindung betrifft Keton-Aldehydharze mit breiter Verträglichkeit aus cycloaliphatischen Ketonen und insbesondere Formaldehyd und gegebenenfalls weiteren Monomeren, ein Verfahren zu ihrer Herstellung und deren Verwendung als Hartharz in Lacken, Druckfarben und weiteren Beschichtungen, insbesondere in Pigmentpräparationen.

Die Kondensation von Cyclohexanon und Methyl-Cyclohexanon mit Aldehyd, insbesondere mit Formaldehyd in Gegenwart von Alkali zu Kondensationsprodukten verschiedenster Art ist bekannt (Ullmann's Encyclopedia of Industrial Chemistry Vol. 23, Verlag Chemie Weinheim, 1993, Seiten 99 bis 105). Eine praktisch universelle Löslichkeit und Verträglichkeit dieser Harze über das gesamte Spektrum an Lösemitteln und Bindemitteln ist nicht gegeben. Besonders die aus ökologischen und toxikologischen Gründen zunehmend eingesetzten Reinaliphaten und Testbenzine scheiden als Verdünner aus. Auch sind bedeutende Bindemitteltypen wie Langöl-Alkydharze, Pflanzenöle, Kohlenwasserstoffharze und Polyamide meist unverträglich. Aus diesem Grunde ist auch ein Einsatz in Mineralöl basierenden Druckfarben und Universalabtönsystemen bzw. Pigmentpräparationen nicht möglich.

Aus ökonomischen und logistischen Gründen werden verstärkt Pigmentpräparationen hergestellt, die in möglichst allen üblichen Beschichtungsstoffen einsetzbar sein müssen. Auf Cyclohexanon- bzw. Methyl-Cyclohexanon-Formaldehydharzen basierende Abtönpasten führen besonders in Beschichtungsstoffen mit wenig polaren Bindemitteln und Lösemitteln zu Instabilitäten.

Aus EP-PS 0 007 106 sind Polykondensationsprodukte aus aliphatischen und cyclischen Ketonen bekannt, die, hergestellt nach dem dort offenbarten Verfahren, sehr hohe Erweichungspunkte und dadurch bedingt vergleichsweise hohe Molgewichte aufweisen und damit in aliphatischen Lösemitteln nicht löslich sind.

Die DE-OS 12 62 600 beschreibt die Herstellung von hochmolekularen Kondensationsprodukten in Gegenwart von Dispergiermitteln.

Die DE-OS 24 00 194 beschreibt Pigmentpräparationen, für die Harze aus Methyl-Cyclohexanon alleine oder durch Kondensation in Mischung mit Formaldehyd verwendet werden.

Die Aufgabe der Erfindung bestand darin, Keton-Aldehydharze mit breiter Verträglichkeit und ein Verfahren zu deren Herstellung zu entwickeln. Das Harz soll mit einem möglichst breiten Spektrum an Lackbindemitteln verträglich sein. Es soll eine möglichst universelle Löslichkeit besitzen, wobei insbesondere die Löslichkeit in Aliphaten angestrebt wird. Die üblichen Keton-Aldehydharzeigenschaften sollen beibehalten werden und gute Pigmentbenetzung gewährleistet sein.

Die der Erfindung zugrundeliegende Aufgabe wird durch aus cyclo-aliphatischen Ketonen, Aldehyd und gegebenenfalls weiteren Monomeren bestehende Keton-Formaldehydharze gelöst, wobei diese
I. 40 bis 100 Mol-%, bezogen auf alle eingesetzten Ketone mindestens eines alkylsubstituierten Cyclohexanons mit einem oder mehreren Alkylresten mit 1 bis 8 Kohlenstoffatomen, ausgenommen ist Methyl-Cyclohexanon
II. 0,8 bis 2,0 mol mindestens eines aliphatischen Aldehyds, bezogen auf 1 mol aller eingesetzten Ketone und
III. 0 bis 60 Mol-%, bezogen auf alle eingesetzten Ketone, weitere Ketone mit aliphatischen, cycloaliphatischen, aromatischen Kohlenwasserstoffresten, wobei diese gleich oder verschieden und wiederum mit den genannten Kohlenwasserstoffresten in der Kohlenwasserstoffkette substituiert sein können, sowie gegebenenfalls Phenole und/oder Harnstoff oder seine Derivate, enthalten.

Besonders bevorzugte C₁- bis C₈-alkylsubstituierte Cyclohexanone sind 4-tert.-Butylcyclohexanon und 3,3,5-Trimethylcyclohexanon.

Die erfindungsgemäßen Keton-Aldehydharze weisen eine breite Löslichkeit und Verträglichkeit auf und sind besonders für universell einsetzbare Pigmentpräparationen geeignet.

Die erfindungsgemäßen Keton-Aldehydharze sind in praktisch allen für Beschichtungen in Frage kommenden organischen Lösemitteln, insbesondere auch Mineralölen, Testbenzinen und Aliphaten, löslich. Damit ist die Möglichkeit gegeben, geruchsarme, umweltschonende und toxikologisch unbedenkliche Beschichtungsstoffe zu formulieren.

Die Keton-Aldehydharze weisen eine breite Verträglichkeit mit Bindemitteln und Harzen auf. Sie sind insbesondere auch mit relativ unpolaren Typen wie Langöl-Alkydharzen, natürlichen Ölen, Kohlenwasserstoffharzen und Polyamiden mischbar. Deshalb eignen sie sich besonders als Hartharz in Lacken und Druckfarben.

Aus den erfindungsgemäßen Keton-Aldehydharzen lassen sich stabile Pigmentpräparationen und Abtönpasten formulieren, die in den meisten Beschichtungsstoffen einsetzbar sind und zu hervorragenden koloristischen Eigenschaften führen.

Die erfindungsgemäßen Keton-Aldehydharze können alle alkylsubstituierten Cyclohexanone mit einem oder mehreren Alkylresten, die insgesamt 1 bis 8 Kohlenwasserstoffatome, ausgenommen ist Methyl-Cyclohexanon, aufweisen, einzeln oder in Mischung enthalten. Als Beispiele können 4-tert.-Amylcyclohexanon, 2-sek.-Butylcyclohexanon, 2-tert.-Butylcyclohexanon, 4-tert.-Butylcyclohexanon und 3,3,5-Trimethylcyclohexanon genannt werden. Bevorzugt werden 4-tert.-Butylcyclohexanon und 3,3,5-Trimethylcyclohexanon.

Als aliphatische Aldehyde eignen sich prinzipiell unverzeigte oder verzweigte Aldehyde, wie z. B. Formaldehyd, Acetaldehyd, Butyraldehyd, Dodecanal, bevorzugt wird jedoch Formaldehyd allein oder in Mischungen eingesetzt.

Der benötigte Formaldehyd wird üblicherweise als ca. 30 Gew.-%ige wäßrige Lösung eingesetzt. Andere Einsatzformen des Formaldehyds sind ebenfalls möglich. Aromatische Aldehyde, wie z. B. Benzaldehyd, können in Mischung mit Formaldehyd ebenfalls enthalten sein.

Als weitere Monomere können die erfindungsgemäßen Keton-Aldehydharze vorrangig Ketone, allein oder in Mischung, enthalten, die aliphatischen, cycloaliphatischen, aromatischen oder gemischten Charakter haben. Als Beispiele seien Aceton, Methylethylketon, Pentanon-3, Methylisobutylketon, Cyclopentanon, Mischungen aus 2,2,4- und 2,4,4-Trimethylcyclopentanon, Cyclohexanon, Cycloheptanon und Cyclooctanon genannt. Bevorzugt sind jedoch Methylethylketon, Cyclohexanon und Acetophenon. Im allgemeinen können aber alle in der Literatur für Ketonharzsynthesen als geeignet genannte Ketone eingesetzt werden.

In untergeordneten Mengen können gegebenenfalls auch weitere Monomere, wie Phenole, Harnstoff und seine Derivate, als zusätzliche Monomere für die erfindungsgemäßen Keton-Aldehydharze enthalten sein.

Eine besondere Ausführungsform der Erfindung beinhaltet Mischungen von Cyclohexanonen. Besondere anwendungstechnische Bedeutung kommen Mischungen aus Trimethylcyclohexanon/Cyclohexanon, 4-tert.-Butylcyclohexanon/Trimethylcyclohexanon/Cyclohexanon und 4-tert.-Butylcyclohexanon/Trimethylcyclohexanon zu.

Durch Variation der Mengenverhältnisse lassen sich Harzeigenschaften wie Schmelzpunkt, Hydroxylzahl und Molgewicht für den Fachmann leicht einstellen.

Die erfindungsgemäßen Keton-Aldehydharze weisen bevorzugt ein mittleres Molekulargewicht im Bereich von 500 bis 1 000, besonders bevorzugt von 500 bis 800 und einen Erweichungspunkt von 70-95°C, besonders bevorzugt von 70-80 °C auf.

Zur Harzsynthese können alle bekannten Verfahren Anwendung finden. Üblicherweise wird in Gegenwart alkalischer Katalysatoren bei Temperaturen von 80 bis 90°C kondensiert. Solche Umsetzungen sind z. B. in Ullmann's Encyclopädie der technischen Chemie Bd. 12, Verlag Chemie Weinheim, 1976, Seiten 547 bis 555 beschrieben.

### Beispiele

Die Erfindung wird in den folgenden Beispielen erläutert.

### Beispiele 1 bis 4

Herstellung von erfindungsgemäßen Keton-Aldehydharzen

| **Rohstoffe** | **Einsatzmengen in Gramm** | | | |
|---|---|---|---|---|
| | **Harz 1** | **Harz 2** | **Harz 3** | **Harz 4** |
| 4-tert.-Butylcyclohexanon | 770,2 | 490,6 | 176,7 | 172,3 |
| Methylethylketon | - | 229,3 | - | - |
| 3,3,5-Trimethylcyclohexanon | - | - | 481,7 | 469,9 |
| Acetophenon | - | - | - | 134,2 |
| Cyclohexanon | - | - | 112,4 | - |
| Formaldehyd (30 Gew.-%ig) | 699,3 | 764,0 | 573,1 | 559,0 |
| NaOH (50 Gew.-%ig) | 40,0 | 101,8 | 114,5 | 111,7 |

Ketone und 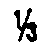 des benötigten Formaldehyds in Form einer ca. 30 m-%igen Formalinlösung werden in üblicher Weise vorgelegt und auf 60 °C erhitzt. Danach wird die benötigte NaOH in Form einer 50 m-%igen wäßrigen Lösung innerhalb von 15 min zugetropft und auf 80 °C erhitzt. Im Anschluß wird innerhalb von 90 min die restliche Formalinmenge zugetropft und 4 Stunden unter Rückfluß bei ca. 85 °C gehalten. Das entstandene Harz wird nach Zugabe von Eisessig mit Wasser neutralgewaschen. Nach Destillation resultieren hellgelbe, spröde Harze mit Erweichungspunkten zwischen 80 und 90 °C.

### Anwendungstechnische Prüfungen

### I. Prüfung der Löslichkeit

Die Harze 1 bis 4 aus den Beispielen 1 bis 4 wurden im Vergleich zu zwei auf dem Markt befindlichen Cyclohexanon-Formaldehyd-Harzen auf ihre Löslichkeit in verschiedenen Lösemitteln geprüft.

| **Lösemittel** | **Löslichkeit (50 m-%ige Lösungen)** | | | | | |
|---|---|---|---|---|---|---|
| | **Harz 1** | **Harz 2** | **Harz 3** | **Harz 4** | **Vergleich A** | **Vergleich B** |
| Ethanol | + | + | + | + | + | + |
| n-Butanol | + | + | + | + | + | + |
| Butylglykol | + | + | + | + | + | + |
| Methylethylketon | + | + | + | + | + | + |
| Ethylacetat | + | + | + | + | + | + |
| Butylacetat | + | + | + | + | + | + |
| Xylol | + | + | + | + | + | + |
| Testbenzin | + | + | + | + | - | - |
| n-Hexan | + | - | + | + | - | - |
| Mineralöl | + | + | + | + | - | - |
| + = vollständig löslich | | | | | | |
| - = unlöslich bzw. nicht vollständig löslich | | | | | | |
| Vergleich A = Kunstharz AFS der Bayer AG | | | | | | |
| Vergleich B = Kunstharz CA der Hüls AG | | | | | | |

### II. Prüfung der Verträglichkeit

Die Harze 1 bis 4 aus den Beispielen 1 bis 4 wurden im Vergleich zu zwei auf dem Markt befindlichen Cyclohexanon-Formaldehyd-Harzen auf ihre Verträglichkeit mit verschiedenen Bindemitteln und Harzen im Gewichtsverhältnis Ketonformaldehydharz/Bindemittel bzw. Harz von 40/60 geprüft. Dazu wurden die Stoffe in geeigneten Lösemitteln gelöst, gemischt und in Form eines getrockneten Filmes auf Glas auf Unverträglichkeit (Trübung etc.) untersucht.

| **Verträglichkeiten** | | | | | | |
|---|---|---|---|---|---|---|
| **Harz/ Bindemittel** | **Harz 1** | **Harz 2** | **Harz 3** | **Harz 4** | **Vergleich A** | **Vergleich B** |
| Polymethacrylat¹ | + | + | + | + | ± | ± |
| Styrolacrylat² | + | + | + | + | + | + |
| Epoxidharz³ | + | + | + | + | + | + |
| Melaminharz⁴ | + | + | + | + | + | + |
| Nitrocellulose⁵ | + | + | + | + | + | + |
| Polyesterharz⁶ | + | + | + | + | + | + |
| Kurzölalkyd⁷ | + | + | + | + | + | + |
| Langölalkyd⁸ | + | + | + | + | ± | ± |
| Kohlenwasserstoffharz⁹ | + | + | + | + | - | - |
| Leinöl | + | + | + | + | - | - |
| Polyamidharz¹⁰ | + | + | + | + | + | + |
| + = vollständig verträglich bzw. klarer Film | | | | | | |
| ± = bedingt verträglich bzw. Filmstörungen | | | | | | |
| - = unverträglich bzw. stark trüber Film | | | | | | |

| | | | | | | |
|---|---|---|---|---|---|---|
| ¹ PLEXIGUM® P 28 / Röhm | | | | | | |
| ² SYNTHACRYL® SC 126 / Hoechst AG | | | | | | |
| ³ EPIKOTE® 828 / Shell | | | | | | |
| ⁴ MAPRENAL® MF 900 / Hoechst AG | | | | | | |
| ⁵ Nitrocellulose E 510 / Wolff Walsrode | | | | | | |
| ⁶ DYNAPOL® LH 908 / Hüls AG | | | | | | |
| ⁷ ALKYLDAL® F 26 / Bayer AG | | | | | | |
| ⁸ ALKYLDAL® F 681 / Bayer AG | | | | | | |
| ⁹ NECIRES® LF 220/160 / Neville Cindu | | | | | | |
| ¹⁰ VERSAMID® 930 / Cray Valley | | | | | | |

### III. Prüfung der Pigmentbenetzung

Mit Harz 4 aus Beispiel 4 wurden Abtönpasten in verschiedenen Farben in der üblichen Weise hergestellt.

| | **Mengenangaben in Gewichtsteilen** | | | |
|---|---|---|---|---|
| **Bestandteil** | **a) weiß** | **b) gelb** | **c) blau** | **d) schwarz** |
| KRONOS® 2310 | 70,0 | - | - | - |
| BAYFERROX® 3920 | - | 55,0 | - | - |
| HELIOGENBLAU® L6875F | - | - | 25,0 | - |
| Flammruß 101 | - | - | - | 25,0 |
| Harz 4 | 10,0 | 12,5 | 24,0 | 15,0 |
| SER AD FX 9085 | 2,5 | 7,0 | 10,0 | 15,0 |
| SER AD FA 196 | - | 3,0 | - | 5,0 |
| Paste BENTONE® SD 2 | 0,5 | 0,5 | - | - |
| SOLVESSO® 100 | 17,0 | 22,0 | 41,0 | 40,0 |
| Abtönpaste | 100,0 | 100,0 | 100,0 | 100,0 |

Die Abtönpasten wurden durch Zugabe von 10 Gewichtsteilen Abtönpaste mi der nachfolgend aufgeführten Alkydharzfarbe zum Lack komplettiert.

| | |
|---|---|
| ALKYLDAL® F 681, 55%ig in Testbenzin | 72,7 Gewichtsteile |
| KRONOS® 2065 | 18,5 Gewichtsteile |
| NUODEX® Co 6 % | 0,3 Gewichtsteile |
| NUODEX® Pb 24 % | 0,9 Gewichtsteile |
| NUODEX® Ca 4 % | 1,0 Gewichtsteile |
| EXKIN® 2 | 0,3 Gewichtsteile |
| SHELLSOL® A | 2,5 Gewichtsteile |
| Testbenzin | 3,8 Gewichtsteile |
| Alkydharzfarbe | 100,0 Gewichtsteile |

Die Pasten ließen sich problemlos zum Lack zumischen. Die Lacke wiesen gute rheologische Eigenschaften und gute Flockulationsstabilität auf.

Es wurden in der üblichen Weise Lackfilme auf Stahlblech hergestellt und beurteilt.

| **geprüfte Eigenschaft** | **a)** | **b)** | **c)** | **d)** |
|---|---|---|---|---|
| | **weiß** | **gelb** | **blau** | **scharz** |
| Glanz 20 ° | 85 % | 88 % | 85 % | 83 % |
| Glanz 60 ° | 91 % | 92 % | 91 % | 89 % |
| Buntheit C* (CIELAB) | - | 43,1 | 46,0 | - |
| Helligkeit L* (CIELAB) | 91,4 | - | - | 29,2 |
| Rub Out ΔE (CIELAB) | - | 0,7 | 1,0 | 1,2 |

Die anderen erfindungsgemäß genannten Harze aus den Beispielen 1 bis 3 ergeben ähnlich gute Eigenschaften. Die als Vergleich herangezogenen Cyclohexanon-Formaldehydharze A und B lassen sich prinzipiell auch für die oben genannten Abtönpasten verwenden. Beim Komplettieren zum fertigen Lack kommt es allerdings zu starken Flockulationserscheinungen durch Unverträglichkeiten. In universell einsetzbaren Abtönpasten können diese Harze nicht verwendet werden.

## Patentansprüche

1. Keton-Aldehydharze auf Basis von cycloaliphatischen Ketonen und aliphatischen Aldehyden,
dadurch gekennzeichnet,
daß sie
I. 40 bis 100 Mol-%, bezogen auf alle eingesetzten Ketone, mindestens eines alkylsubstituierten Cyclohexanons mit einem oder mehreren Alkylresten mit 1 bis 8 Kohlenstoffatomen, ausgenommen ist Methyl-Cyclohexanon,
II. 0,8 bis 2,0 mol mindestens eines aliphatischen Aldehyds, bezogen auf 1 mol aller eingesetzten Ketone und
III. 0 bis 60 Mol-%, bezogen auf alle eingesetzten Ketone, weitere Ketone mit aliphatischen, cycloaliphatischen, aromatischen Kohlenwasserstoffresten, wobei diese gleich oder verschieden und wiederum mit den genannten Kohlenwasserstoffresten in der Kohlenwasserstoffkette substituiert sein können, sowie gegebenenfalls Phenole und/oder Harnstoff oder seine Derivate, enthalten.

2. Keton-Aldehydharze nach Anspruch 1,
dadurch gekennzeichnet,
daß sie als Komponente I 4-tert.-Butylcyclohexanon und/oder 3,3,5-Trimethylcyclohexanon enthalten.

3. Keton-Aldehydharze nach Anspruch 1 oder 2,
dadurch gekennzeichnet,
daß sie als Komponente II mindestens ein Monomer aus der Gruppe Formaldehyd, Acetaldehyd, Butyraldehyd, Dodecanal und Benzaldehyd enthalten.

4. Keton-Aldehydharze nach den Ansprüchen 1 bis 3,
dadurch gekennzeichnet,
daß sie als Komponente II Formaldehyd enthalten.

5. Keton-Aldehydharze nach den Ansprüchen 1 bis 4,
dadurch gekennzeichnet,
daß sie als Komponente III Acetophenon, Methylethylketon und/oder Cyclohexanon enthalten.

6. Keton-Aldehydharze nach den Ansprüchen 1 bis 5,
dadurch gekennzeichnet,
daß sie ein mittleres Molekulargewicht von 500 bis 1 000 und einen Erweichungspunkt von 70 bis 95 °C aufweisen.

7. Keton-Aldehydharze nach Anspruch 1 oder den Ansprüchen 3 bis 6
dadurch gekennzeichnet,
daß sie Gemische aus 3,3,5-Trimethylcyclohexanon, 4-tert.-Butylcyclohexanon und/oder Cyclohexanon enthalten.

8. Verwendung der Keton-Aldehydharze nach einem der vorherigen Ansprüche als Zusatzharze für Beschichtungsstoffe.

9. Verwendung der Keton-Aldehydharze nach einem der vorherigen Ansprüche zur Herstellung von Pigmentkonzentraten oder Abtönpasten.

10. Keton-Aldehydharze auf Basis von cycloaliphatischen Ketonen und aliphatischen Aldehyden,
dadurch gekennzeichnet,
daß sie erhältlich sind durch Kondensation von
I. 40 bis 100 Mol-%, bezogen auf alle eingesetzten Ketone mindestens eines alkylsubstituierten Cyclohexanons mit einem oder mehreren Alkylresten mit 1 bis 8 Kohlenstoffatomen, ausgenommen ist Methyl-Cyclohexanon,
II. 0,8 bis 2,0 mol mindestens eines aliphatischen Aldehyds, bezogen auf 1 mol aller eingesetzten Ketone und
III. 0 bis 60 Mol-%, bezogen auf alle eingesetzten Ketone, weitere Ketone mit aliphatischen, cycloaliphatischen, aromatischen Kohlenwasserstoffresten, wobei diese gleich oder verschieden und wiederum mit den genannten Kohlenwasserstoffresten in der Kohlenwasserstoffkette substituiert sein können, sowie gegebenenfalls Phenole und/oder Harnstoff oder seine Derivate,
in Gegenwart von alkalischen Katalysatoren.

11. Verfahren zur Herstellung von Keton-Aldehydharzen auf Basis von cycloaliphatischen Ketonen und aliphatischen Aldehyden,
dadurch gekennzeichnet,
daß sie durch Kondensation von
I. 40 bis 100 Mol-%, bezogen auf alle eingesetzten Ketone mindestens eines alkylsubstituierten Cyclohexanons mit einem oder mehreren Alkylresten mit 1 bis 8 Kohlenstoffatomen, ausgenommen ist Methyl-Cyclohexanon,
II. 0,8 bis 2,0 mol mindestens eines aliphatischen Aldehyds, bezogen auf 1 mol aller eingesetzten Ketone und
III. 0 bis 60 Mol-%, bezogen auf alle eingesetzten Ketone, weitere Ketone mit aliphatischen, cycloaliphatischen aromatischen Kohlenwasserstoffresten, wobei diese gleich oder verschieden und wiederum mit den genannten Kohlenwasserstoffresten in der Kohlenwasserstoffkette substituiert sein können, sowie gegebenenfalls Phenole und/oder Harnstoff oder seine Derivate,
in Gegenwart von alkalischen Katalysatoren bei Temperaturen von 80 bis 90 °C hergestellt werden.

12. Verfahren nach Anspruch 11,
dadurch gekennzeichnet,
daß die Keton-Aldehydharze ein mittleres Molekulargewicht zwischen 500 bis 1 000 und einen Erweichungspunkt von 70 bis 95 °C aufweisen.

## Claims

1. Ketone-aldehyde resins based on cycloaliphatic ketones and aliphatic aldehydes, characterized in that they contain
I. from 40 to 100 mol%, based on all of the ketones employed, of at least one alkyl-substituted cyclohexanone having one or more alkyl radicals of 1 to 8 carbon atoms, methylcyclohexanone being excepted,
II. from 0.8 to 2.0 mol of at least one aliphatic aldehyde, per mol of all of the ketones employed, and
III. from 0 to 60 mol%, based on all of the ketones employed, of further ketones having aliphatic, cycloaliphatic or aromatic hydrocarbon radicals which may be substituted in the hydrocarbon chain by identical or different substituents and, in turn, by the abovementioned hydrocarbon radicals, and, if desired, phenols and/or urea or its derivatives.

2. Ketone-aldehyde resins according to claim 1, characterized in that they contain as component I 4-tert-butylcyclohexanone and/or 3,3,5-trimethylcyclohexanone.

3. Ketone-aldehyde resins according to claim 1 or 2, characterized in that they contain as component II at least one monomer from the group consisting of formaldehyde, acetaldehyde, butyraldehyde, dodecanal and benzaldehyde.

4. Ketone-aldehyde resins according to any of claims 1 to 3, characterized in that they contain formaldehyde as component II.

5. Ketone-aldehyde resins according to any of claims 1 to 4, characterized in that they contain as component III acetophenone, methyl ethyl ketone and/or cyclohexanone.

6. Ketone-aldehyde resins according to any of claims 1 to 5, characterized in that they have an average molecular weight of from 500 to 1,000 and a softening point of from 70 to 95°C.

7. Ketone-aldehyde resins according to claim 1 or any of claims 3 to 6, characterized in that they contain mixtures of 3,3,5-trimethylcyclohexanone, 4-tert-butylcyclohexanone and/or cyclohexanone.

8. The use of the ketone-aldehyde resins according to any one of the preceding claims as resin additives to coating systems.

9. The use of the ketone-aldehyde resins according to any one of the preceding claims for the preparation of pigment concentrates or tinting pastes.

10. Ketone-aldehyde resins based on cycloaliphatic ketones and aliphatic aldehydes, characterized in that they are obtainable by condensation of
I. from 40 to 100 mol%, based on all of the ketones employed, of at least one alkyl-substituted cyclohexanone having one or more alkyl radicals of 1 to 8 carbon atoms, methylcyclohexanone being excepted,
II. from 0.8 to 2.0 mol of at least one aliphatic aldehyde, per mol of all of the ketones employed, and
III. from 0 to 60 mol%, based on all of the ketones employed, of further ketones having aliphatic, cycloaliphatic or aromatic hydrocarbon radicals which may be substituted in the hydrocarbon chain by identical or different substituents and, in turn, by the abovementioned hydrocarbon radicals, and, if desired, phenols and/or urea or its derivatives
in the presence of alkaline catalysts.

11. A process for the preparation of ketone-aldehyde resins based on cycloaliphatic ketones and aliphatic aldehydes, characterized in that they are prepared by condensation of
I. from 40 to 100 mol%, based on all of the ketones employed, of at least one alkyl-substituted cyclohexanone having one or more alkyl radicals of 1 to 8 carbon atoms, methylcyclohexanone being excepted.
II. from 0.8 to 2.0 mol of at least one aliphatic aldehyde, per mol of all of the ketones employed, and
III. from 0 to 60 mol%, based on all of the ketones employed, of further ketones having aliphatic, cycloaliphatic or aromatic hydrocarbon radicals which may be substituted in the hydrocarbon chain by identical or different substituents and, in turn, by the abovementioned hydrocarbon radicals, and, if desired, phenols and/or urea or its derivatives
in the presence of alkaline catalysts at temperatures of from 80 to 90°C.

12. A process according to claim 11, characterized in that the ketone-aldehyde resins have an average molecular weight of from 500 to 1,000 and a softening point of from 70 to 95°C.

## Revendications

1. Résines cétone-aldéhyde à base de cétones aliphatiques, et d'aldéhydes aliphatiques
caractérisées en ce qu'elles contiennent :
I.de 40 à 100 % molaire, par rapport à toutes les cétones utilisées, d'au moins une cyclohexanone à substitution alkyle avec un ou plusieurs radicaux alkyles avec 1 à 8 atomes de carbone à l'exception de la méthylcyclohexanone ;
II.de 0,8 à 2,0 mole d'au moins un aldéhyde aliphatique, par rapport à une mole de toutes les cétones utilisées ; et
III.de 0 à 60 % molaire, par rapport à toutes les cétones utilisées, d'autres cétones à radicaux hydrocarbonés aliphatiques, cyclo-aliphatiques ou aromatiques, ceux-ci pouvant être identiques ou différents et à nouveau être substitués par l'ensemble des radicaux hydrocarbonés mentionnés dans la chaîne hydrocarbonée, ainsi que le cas échéant des phénols et/ou des urées ou leurs dérivés.

2. Résines cétone-aldéhyde selon la revendication 1,
caractérisées en ce qu'
elles contiennent comme composant I la 4-tert-butylcyclohexanone et/ou la 3,3,5-triméthylcyclohexanone.

3. Résines cétone-aldéhyde selon la revendication 1 ou 2,
caractérisées en ce qu'
elles contiennent comme composant II au moins un monomère du groupe constitué par le formaldéhyde, l'acétaldéhyde, le butyraldéhyde, le dodécanal et le benzaldéhyde.

4. Résines cétone-aldéhyde selon la revendication 1 ou 3,
caractérisées en ce qu'
elles contiennent comme composant II le formaldéhyde.

5. Résines cétone-aldéhyde selon la revendication 1 ou 4,
caractérisées en ce qu'
elles contiennent comme composant III l'acétophénone, la méthyléthylcétone et/ou la cyclohexanone.

6. Résines cétone-aldéhyde selon la revendication 1 ou 5,
caractérisées en ce qu'
elles présentent un poids moléculaire moyen de 500 à 1000 et un point de ramollissement de 70 à 95°C.

7. Résines cétone-aldéhyde selon la revendication 1 ou la revendication 3 à 6,
caractérisées en ce qu'
elles contiennent des mélanges de 3,3,5-triméthylcyclohexanone, 4-tert-butyl-cyclohexanone et/ou cyclohexanone.

8. Utilisation des résines cétone-aldéhyde selon l'une des revendications précédentes comme résines additionnelles pour les matériaux de revêtement.

9. Utilisation des résines cétone-aldéhyde selon l'une des revendications précédentes pour fabriquer des concentrés de pigment ou des pâtes de nuançage.

10. Résines cétone-aldéhyde à base de cétones cycloaliphatiques et d'aldéhydes aliphatiques,
caractérisées en ce qu'
on les obtient par condensation
I. de 40 à 100 % molaire, par rapport à toutes les cétones utilisées, d'au moins une cyclohexanone à substitution alkyle avec un ou plusieurs radicaux alkyles en C₁ à C₈, à l'exception de la méthylcyclohexanone ;
II. de 0,8 à 2,0 mole d'au moins un aldéhyde aliphatique, par rapport à une mole de toutes les cétones utilisées ; et
de 0 à 60 % molaire, par rapport à toutes les cétones utilisées, d'autres cétones à radicaux hydrocarbonés aliphatiques, cyclo-aliphatiques ou aromatiques, ceux-ci pouvant être identiques ou différents et à nouveau être substitués par l'ensemble des radicaux hydrocarbonés mentionnés dans la chaîne hydrocarbonée, ainsi que le cas échéant des phénols et/ou l'urée ou leurs dérivés, en présence de catalyseurs alcalins.

11. Procédé de fabrication de résines cétone-aldéhyde à base de cétones aliphatiques et d'aldéhydes aliphatiques, caractérisé en ce qu'on les obtient par condensation :
I. de 40 à 100 % molaire, par rapport à toutes les cétones utilisées, d'au moins une cyclohexanone à substitution alkyle avec un ou plusieurs radicaux alkyle avec 1 à 8 atomes de carbone à l'exception de la méthylcyclohexanone ;
II. de 0,8 à 2,0 mole d'au moins un aldéhyde aliphatique, par rapport à une mole de toutes les cétones utilisées ; et
de 0 à 60 % molaire, par rapport à toutes les cétones utilisées, d'autres cétones à radicaux hydrocarbonés aliphatiques, cyclo-aliphatiques ou aromatiques, ceux-ci pouvant être identiques ou différents et à nouveau être substitués par l'ensemble des radicaux hydrocarbonés mentionnés dans la chaîne hydrocarbonée, ainsi que le cas échéant des phénols et/ou de l'urée ou leurs dérivés, en présence de catalyseurs alcalins à des températures de 80 à 90°C.

12. Procédé selon la revendication 11,
caractérisé en ce que
les résines cétone-aldéhyde présentent un poids moléculaire moyen compris entre 500 et 1000 et un point de ramollissement de 70 à 95°C.
